# EUROPÄISCHE PATENTSCHRIFT

(11) **EP 4 530 093 B1**
(45) Veröffentlichungstag und Bekanntmachung des Hinweises auf die Patenterteilung: **28.01.2026**
(21) Anmeldenummer: 24196334.7
(22) Anmeldetag: 26.08.2024
(51) Int. Cl.: B60B 33/00, B60B 33/04, B65G 39/06

(54) **LAUFROLLENANORDNUNG**
TRACK ROLLER ASSEMBLY
DISPOSITIF DE GALET DE ROULEMENT

(30) Priorität: 28.09.2023 AT 1102023
(43) Veröffentlichungstag der Anmeldung: 02.04.2025
(73) Patentinhaber: Faigle Kunststoffe GmbH, 6971 Hard (AT)
(72) Erfinder: Kienreich, Tobias, 6912 Hörbranz (AT); Greußing, Laurin, 6861 Alberschwende (AT)
(74) Vertreter: Torggler & Hofmann Patentanwälte - Rankweil

(56) Entgegenhaltungen:
- EP-B1- 2 625 048
- AT-A4- 520 732
- DE-A1- 2 937 571
- US-A- 3 818 541

## Beschreibung

Die vorliegende Erfindung betrifft eine Laufrollenanordnung umfassend eine Laufrolle und eine Laufrollenaufhängung, wobei die Laufrolle einen Laufrollenachskörper und einen Laufrollenkörper mit Laufrollenachsaufnahmeöffnung aufweist und der Laufrollenkörper drehbar auf dem, durch die Laufrollenachsaufnahmeöffnung hindurchgeführten Laufrollenachskörper gelagert ist, wobei der Laufrollenachskörper unter Zwischenschaltung von zumindest zwei elastischen Dämpfungskörpern in Einschubkanälen der Laufrollenaufhängung gelagert ist.

Aus dem Stand der Technik, wie beispielsweise aus der AT 520732 A4, sind Laufrollenanordnungen für Förderanlagen, insbesondere für Transportwagen für Regallager für Stückgut, bekannt. Solche flurgebundenen, schienengeführten Transportwagen werden auch als Shuttle oder Verschiebewagen bezeichnet.

Derartige Laufrollenanordnungen weisen dabei wenigstens eine, meist gabelförmige, Laufrollenaufhängung und eine Laufrolle mit einem Laufrollenkörper sowie einem Laufrollenachskörper auf. Zur Dämpfung kann zusätzlich wenigstens ein Dämpfungskörper vorgesehen sein. Außerdem ist bei der gattungsgemäßen AT 520732 A4 jeweils ein Clip seitlich neben dem Dämpfungskörper vorgesehen, um die Laufrolle lösbar mit der Laufrollenaufhängung zu verbinden.

Nachteilig beim Stand der Technik ist, dass viele Einzelteile einer gedämpften Laufrollenanordnung notwendig sind und damit einhergehend mechanische Schwachstellen und/oder viele Verschleißflächen vorhanden sind.

Die Aufgabe der vorliegenden Erfindung besteht also darin, die Nachteile des Standes der Technik zumindest teilweise zu beheben und eine gegenüber dem Stand der Technik verbesserte Laufrollenanordnung anzugeben.

Diese Aufgabe wird gelöst durch eine Laufrollenanordnung mit den Merkmalen des Anspruchs 1.

Es ist somit bei einer Laufrollenanordnung gemäß dem Oberbegriff des Anspruchs 1 erfindungsgemäß vorgesehen, dass der Laufrollenachskörper in einer Befestigungsstellung mittels der Dämpfungskörper klemmend in den Einschubkanälen der Laufrollenaufhängung befestigt ist.

Durch eine erfindungsgemäße Laufrollenanordnung wird somit ohne einen oder mehrere Clips eine gedämpfte Befestigung der Laufrolle in der Laufrollenaufhängung hergestellt, was durch die Einsparung von Einzelteilen zu einer verbesserten Laufrollenanordnung führt.

Somit erfüllen die elastischen Dämpfungskörper eine Doppelfunktion, nämlich die bisher bekannte Dämpfung von Schwingungen in der Laufrollenanordnung und zusätzlich die Befestigung der Laufrolle an der Laufrollenaufhängung.

In einem bevorzugten Ausführungsbeispiel kann vorgesehen sein, dass der Laufrollenachskörper in der Befestigungsstellung ausschließlich mittels der Dämpfungskörper klemmend in den Einschubkanälen der Laufrollenaufhängung befestigt ist.

Eine ausschließliche Befestigung des Laufrollenachskörpers in den Einschubkanälen der Laufrollenaufhängung bedeutet in diesem Zusammenhang, dass die Befestigung ausschließlich durch die Elastizität der Dämpfungskörper zumindest in Form eines Kraftschlusses, bevorzugt eines Reibschlusses, hergestellt wird.

Zusätzlich können auch Formschlussverbindungen zwischen dem jeweiligen Dämpfungskörper und der Laufrollenaufhängung vorhanden sein. Diese können z.B. zur Positionsstabilisation beim Herbeiführen oder Halten der Befestigungsstellung und gegen ein unbeabsichtigtes Verrutschen der Dämpfungskörper relativ zu den Einschubkanälen vorgesehen sein.

Eine Laufrollenaufhängung ist eine Vorrichtung, an der die Laufrolle befestigt werden kann oder mit anderen Worten aufgehängt werden kann.

In einer bevorzugten Ausführungsvariante kann vorgesehen sein, dass die Laufrollenaufhängung einstückig ausgebildet ist.

In einer bevorzugten Ausführungsvariante kann vorgesehen sein, dass die Laufrollenaufhängung einstückig ausgebildet und aus einem einzigen Material aufgebaut ist.

In einer bevorzugten Ausführungsvariante kann vorgesehen sein, dass die Laufrollenaufhängung
- eine Zugfestigkeit in einem Bereich von 50 MPa bis 300 MPa und/oder
- einen Elastizitätsmodul in einem Bereich von 1.500 MPa bis 35.000 MPa
aufweist.

Eine Laufrolle kann eine Felge und eine Lauffläche aufweisen. Die Felge, die Lauffläche und/oder andere Teile der Laufrolle können aus verschiedenen oder einem einzigen Material hergestellt sein können.

In einer bevorzugten Ausführungsvariante kann vorgesehen sein, dass die Laufrolle aus einer oder mehreren Sorten von Kunststoffen hergestellt ist.

Die Laufrollenachsaufnahmeöffnung kann als eine, durch die Laufrolle hindurchgehende Aussparung ausgebildet sein, durch welche der Laufrollenachskörper durchgeführt werden kann.

Der Laufrollenachskörper ist ein physisch vorhandener Körper. Durch ihn kann die Rollendrehachse hindurchführen und/oder er kann die Rollendrehachse selbst darstellen.

In einer bevorzugten Ausführungsvariante kann vorgesehen sein, dass der Laufrollenachskörper ein rotationssymmetrischer, physisch vorhandener Körper ist, besonders bevorzugt ein zylindrischer Körper ist.

In einer bevorzugten Ausführungsvariante kann vorgesehen sein, dass der Laufrollenachskörper einen hohlzylindrischen Basiskörper aufweist, wobei der hohlzylindrische Basiskörper an einem Ende mit einem Deckel abgeschlossen sein kann.

In einer bevorzugten Ausführungsvariante kann vorgesehen sein, dass der Laufrollenachskörper stiftförmig und/oder bolzenförmig ausgebildet ist.

In einer bevorzugten Ausführungsvariante kann vorgesehen sein, dass der Laufrollenachskörper
- eine Zugfestigkeit in einem Bereich von 20 MPa bis 300 MPa und/oder
- einen Elastizitätsmodul in einem Bereich von 1.500 MPa bis 35.000 MPa
aufweist.

Der Laufrollenkörper kann neben einem Körper mit einer Lauffläche auch ein Lager zur leichtgängigen Lagerung des Laufrollenkörper auf dem Laufrollenachskörper aufweisen.

In einer bevorzugten Ausführungsvariante kann vorgesehen sein, dass das Lager des Laufrollenkörpers ein Gleitlager oder ein Wälzlager, bevorzugt ein Rollenlager oder ein Kugellager, ist.

Einer der oder beide Dämpfungskörper kann bzw. können aus einem oder mehreren Materialien aufgebaut sein.

In einer bevorzugten Ausführungsvariante kann vorgesehen sein, dass einer der, vorzugsweise die, Dämpfungskörper einstückig ausgebildet ist bzw. jeweils sind.

In einer bevorzugten Ausführungsvariante kann vorgesehen sein, dass einer der, vorzugsweise die, Dämpfungskörper einstückig ausgebildet und aus einem einzigen Material aufgebaut ist bzw. jeweils sind.

In einer bevorzugten Ausführungsvariante kann vorgesehen sein, dass einer der, vorzugsweise die, Dämpfungskörper
- eine Zugfestigkeit in einem Bereich von 10 MPa bis 60 MPa und/oder
- einen Elastizitätsmodul in einem Bereich von 50 MPa bis 300 MPa und/oder
- eine Härte im Bereich von 50 Shore A bis 64 Shore D
aufweist bzw. aufweisen.

Die Einschubkanäle sind Konstruktionselemente der Laufrollenaufhängung, welche dazu ausgebildet sind, den Laufrollenachskörper mit den beiden Dämpfungskörpern klemmend aufzunehmen.

In einer bevorzugten Ausführungsvariante kann vorgesehen sein, dass die Einschubkanäle jeweils mit einem U-förmigen Querschnitt ausgebildet sind.

Die Befestigungsstellung der Laufrollenanordnung ist eine für den Normalbetrieb der Laufrollenanordnung vorgesehene Endstellung, in welcher der Laufrollenachskörper unter Zwischenschaltung der zumindest zwei elastischen Dämpfungskörper in den Einschubkanälen der Laufrollenaufhängung gelagert ist.

Mit anderen Worten ist die Befestigungsstellung eine Endstellung, in welcher der Laufrollenachskörper unter Zwischenschaltung der zumindest zwei elastischen Dämpfungskörper in Einschubkanälen der Laufrollenaufhängung gelagert ist, und wobei vorzugsweise die zwei elastischen Dämpfungskörper an wenigstens einem Anschlag, bevorzugt an zwei Anschlägen, der Laufrollenaufhängung anstehen.

In einer bevorzugten Ausführungsvariante kann vorgesehen sein, dass die Laufrollenanordnung einen elektrischen Durchgangswiderstand, bevorzugt in einem Bereich von 10³ bis 10¹² Ohm, aufweist.

Es kann auch vorgesehen sein, dass die Laufrollenanordnung elektrisch isolierend ausgeführt ist.

Als Materialien für die Laufrollenanordnung, konkret für die Laufrollenaufhängung und/oder die Laufrolle und/oder den Laufrollenachskörper und/oder den Laufrollenkörper und/oder die Dämpfungskörper, kann Kunststoff vorgesehen sein, vorzugsweise eine oder mehrere der folgende Kunststoffsorten:
Polyolefine, Polyamide (PA), Polyethylenterephthalat (PET), Polybutylenterephthalat (PBT), Polyetheretherketon (PEEK), Polyketon (PEK), Polyphenylensulfid (PPS), Polyoxymethylen (POM). Zur Verstärkung des Ausgangsmaterials, bevorzugt einer oder mehrere der oben genannten Kunststoffe, für die Laufrollenanordnung, konkret für die Laufrollenaufhängung und/oder die Laufrolle und/oder den Laufrollenachskörper und/oder den Laufrollenkörper und/oder die Dämpfungskörper, können Verstärkungsstoffe vorgesehen sein. Als Verstärkungsstoffe kann ein oder mehrere der folgenden Materialien vorgesehen sein:
Glas, Kohlenstoff, Aramid, Basalt

Verstärkungsstoffe können in Form von Verstärkungsfasern, bevorzugt Kohlefasern, im Basismaterial der Laufrollenanordnung mit einem Massenanteil im Bereich von 5% bis zu 60% und/oder mit einer Faserlänge im Bereich von 0,1 mm bis zu 15 mm vorgesehen sein.

Kohlefasern können auch als Kohlenstofffaser, Karbonfaser oder Carbonfaser bezeichnet werden.

Die Laufrollenanordnung als Ganzes oder Teile davon, konkret die Laufrollenaufhängung und/oder die Laufrolle und/oder der Laufrollenachskörper und/oder der Laufrollenkörper und/oder die Dämpfungskörper, kann vorzugsweise aus Kunststoff bestehen, wobei der Kunststoff elektrisch leitenden Fasern, vorzugsweise Kohlefasern, aufweist.

Eine antistatische Wirkung verhindert eine statische Aufladung, insbesondere infolge des Rollens der Laufrollenanordnung auf unterschiedlichen Laufbahnen. Auch ein Gehalt von anderen elektrisch leitfähigen Fasern und/oder Partikeln und/oder eine elektrisch leitende Beschichtung könnte zum Zweck der Antistatik vorgesehen sein.

Zur Verbesserung von Gleitlagern wie beispielsweise eines Schwenkgleitlagers der Laufrollenanordnung kann ein inkorporierter also in das Material des jeweiligen Bauteils integrierter bzw. in diesem Material angeordneter Schmierstoff vorgesehen sein. Als inkorporierter Schmierstoff für die Laufrollenanordnung, konkret für die Laufrollenaufhängung und/oder die Laufrolle und/oder den Laufrollenachskörper und/oder den Laufrollenkörper und/oder die Dämpfungskörper kann ein oder mehrere der folgende Materialien vorgesehen sein:
Polytetrafluorethylen (PTFE), High Density Polyethylen (HD-PE), Ultra High Molecular Weight Polyethylen (UHMW-PE), Perflourpolyether (PFPE), Molybdändisulfid (MoS₂), Graphit, Siloxan, Öl

Inkorporierte Schmierstoffe können in Form von Füllpartikeln im Material der Laufrollenanordnung mit einem Massenanteil im Bereich von 0,2% bis zu 30% vorgesehen sein.

Der Vollständigkeit halber wird darauf hingewiesen, dass im Zuge der Beschreibung dieser Erfindung die verwendeten Zahlwörter wie ein, zwei, drei und dergleichen, grundsätzlich nur die vorhandene Mindestmenge eines Merkmals der erfindungsgemäßen Laufrollenanordnung beschreibt. Einzelne Merkmale oder Bestandteile können natürlich auch in größerer Anzahl vorhanden sein. So können erfindungsgemäße Laufrollenanordnungen z.B. mehr als eine Laufrolle, mehr als zwei Dämpfungskörper usw. aufweisen. In diesem Sinne ist z.B. also das Zahlwort ein soweit sinnvoll im Sinne von mindestens ein usw. zu verstehen.

Weitere vorteilhafte Ausführungsformen der Anordnung werden in den abhängigen Ansprüchen definiert.

Gemäß einer bevorzugten Ausführungsform der Laufrollenanordnung ist es vorgesehen, dass der Laufrollenachskörper mittels elastischer Deformation zumindest eines der Dämpfungskörper in die Einschubkanäle der Laufrollenaufhängung einführbar und aus diesen entnehmbar ist.

Gemäß einer bevorzugten Ausführungsform der Laufrollenanordnung ist es vorgesehen, dass der Laufrollenachskörper mittels elastischer Deformation der Dämpfungskörper in die Einschubkanäle der Laufrollenaufhängung einführbar und aus diesen entnehmbar ist.

Gemäß einer bevorzugten Ausführungsform der Laufrollenanordnung ist es vorgesehen, dass der Laufrollenachskörper härter als zumindest einer der Dämpfungskörper ist.

Gemäß einer bevorzugten Ausführungsform der Laufrollenanordnung ist es vorgesehen, dass der Laufrollenachskörper härter als die Dämpfungskörper ist.

In einer bevorzugten Ausführungsvariante kann vorgesehen sein, dass der Laufrollenachskörper
- eine Zugfestigkeit, welche gegenüber der Zugfestigkeit eines der, vorzugsweise der, Dämpfungskörper zweimal bis fünfmal größer ist bzw. sind, und/oder
- einen Elastizitätsmodul, welcher gegenüber dem Elastizitätsmodul eines der, vorzugsweise der, Dämpfungskörper zweimal bis 30-mal größer ist bzw. sind,
aufweist.

Gemäß einer bevorzugten Ausführungsform der Laufrollenanordnung ist es vorgesehen, dass zumindest einer der Dämpfungskörper in der Befestigungsstellung direkt an zumindest einer Wand der Laufrollenaufhängung, welche einen der Einschubkanäle begrenzt, anliegt.

Gemäß einer bevorzugten Ausführungsform der Laufrollenanordnung ist es vorgesehen, dass die Dämpfungskörper in der

Befestigungsstellung jeweils direkt an zumindest einer Wand der Laufrollenaufhängung, welche einen der Einschubkanäle begrenzt, anliegen.

Gemäß einer bevorzugten Ausführungsform der Laufrollenanordnung ist es vorgesehen, dass zumindest einer der Dämpfungskörper als, auf ein Ende des Laufrollenachskörpers, vorzugsweise zerstörungsfrei abnehmbar, aufgesetzte Kappe ausgebildet ist.

Gemäß einer bevorzugten Ausführungsform der Laufrollenanordnung ist es vorgesehen, dass die Dämpfungskörper als, auf jeweils ein Ende des Laufrollenachskörpers, vorzugsweise zerstörungsfrei abnehmbar, aufgesetzte Kappen ausgebildet sind.

In einer anderen Ausführungsvariante kann vorgesehen sein, dass zumindest einer der, vorzugsweise die, Dämpfungskörper als, auf ein Ende des Laufrollenachskörpers, bevorzugt nicht-abnehmbar, aufgesetzte, bevorzugt mittels eines Formgebungsverfahrens aufgespritzte, Kappe bzw. Kappen ausgebildet ist bzw. sind.

Gemäß einer bevorzugten Ausführungsform der Laufrollenanordnung ist es vorgesehen, dass zumindest einer der Dämpfungskörper in der Befestigungsstellung zusätzlich zur klemmenden Befestigung mit zumindest einer Wand der Laufrollenaufhängung, welche einen der Einschubkanäle begrenzt, eine Rastverbindung ausbildet.

Gemäß einer bevorzugten Ausführungsform der Laufrollenanordnung ist es vorgesehen, dass die Dämpfungskörper in der Befestigungsstellung zusätzlich zur klemmenden Befestigung jeweils mit zumindest einer Wand der Laufrollenaufhängung, welche einen der Einschubkanäle begrenzt, eine Rastverbindung ausbilden.

Bei einer Rastverbindung können durch Formschluss die zu verbindenden Teile passend ausgerichtet und durch Federkraft formschlüssig lösbar fixiert werden. Derartige Rastverbindungen sind in verschiedensten Ausführungen bekannt, wobei die nachfolgende eine besonders bevorzugte Ausführungsvariante darstellt.

Gemäß einer bevorzugten Ausführungsform der Laufrollenanordnung ist es vorgesehen, dass die Rastverbindung einen Rastverbindungsvorsprung als erstes Rastverbindungselement und eine Rastverbindungsaufnahme, in die der Rastverbindungsvorsprung elastisch einrastbar ist, als zweites Rastverbindungselement aufweist, wobei eines der Rastverbindungselemente an einem der Dämpfungskörper ausgebildet ist und das andere der Rastverbindungselemente an einer Wand der Laufrollenaufhängung, welche einen der Einschubkanäle begrenzt, ausgebildet ist.

Gemäß einer bevorzugten Ausführungsform der Laufrollenanordnung ist es vorgesehen, dass die jeweilige Rastverbindung einen Rastverbindungsvorsprung als erstes Rastverbindungselement und eine Rastverbindungsaufnahme, in die der Rastverbindungsvorsprung elastisch einrastbar ist, als zweites Rastverbindungselement aufweist, wobei eines der Rastverbindungselemente an einem der Dämpfungskörper ausgebildet ist und das andere der Rastverbindungselemente an einer Wand der Laufrollenaufhängung, welche einen der Einschubkanäle begrenzt, ausgebildet ist.

In einer bevorzugten Ausführungsvariante kann vorgesehen sein, dass der Rastverbindungsvorsprung und/oder die Rastverbindungsaufnahme an und/oder in der Laufrollenaufhängung ausgebildet ist.

In einer bevorzugten Ausführungsvariante kann vorgesehen sein, dass der Rastverbindungsvorsprung und/oder die Rastverbindungsaufnahme in sich elastisch und/oder elastisch gelagert, bevorzugt abgerundet, sind. Der Rastverbindungsvorsprung kann als Noppe ausgebildet sein.

Gemäß einer bevorzugten Ausführungsform der Laufrollenanordnung ist es vorgesehen, dass die Einschubkanäle jeweils zwischen einer, vorzugsweise in einer Betriebsstellung der Laufrollenanordnung nach unten weisenden, Einführöffnung zum Einführen des jeweiligen Dämpfungskörpers und einem Anschlag für den jeweiligen Dämpfungskörper längserstreckt ausgebildet sind, wobei der jeweilige Dämpfungskörper in der Befestigungsstellung am jeweiligen Anschlag anliegt.

Die Betriebsstellung der Laufrollenanordnung ist die Stellung, welche die Laufrollenanordnung bei bestimmungsgemäßer Verwendung einnimmt.

Es ist auch denkbar, die Einschubkanäle anders als in den nachfolgend dargestellten Ausführungsbeispielen zu konstruieren, sodass eine Laufrolle nicht parallel zur Schwenkachse der Laufrollenaufhängung in die Einschubkanäle eingebracht wird, sondern stattdessen senkrecht zur Schwenkachse der Laufrollenaufhängung eingeführt wird. Die Einschubkanäle können in der Betriebsstellung der Laufrollenanordnung beim Fahren auf einem horizontalen Untergrund als auch horizontal verlaufen. Es sei bezüglich dieser Ausführungsvariante auf die AT 520732 A4 verwiesen.

In einer bevorzugten Ausführungsvariante kann vorgesehen sein, dass der jeweilige Dämpfungskörper mit der Hälfte seines Umfangs, bevorzugt mit 180° seines Umfangs, in der Befestigungsstellung an einem Anschlag der Laufrollenaufhängung anliegt. Diese Anschläge der Laufrollenaufhängung können die jeweiligen Einschubkanäle begrenzen.

Gemäß einer bevorzugten Ausführungsform der Laufrollenanordnung ist es vorgesehen, dass zumindest einer der Dämpfungskörper einen vorstehenden Kragen und zumindest eine Wand der Laufrollenaufhängung, welche einen der Einschubkanäle begrenzt, einen Kragenaufnahmekanal zur Aufnahme des Kragens aufweist.

Gemäß einer bevorzugten Ausführungsform der Laufrollenanordnung ist es vorgesehen, dass die Dämpfungskörper jeweils einen vorstehenden Kragen und zumindest eine jeweilige Wand der Laufrollenaufhängung, welche einen jeweiligen der Einschubkanäle begrenzt, einen Kragenaufnahmekanal zur Aufnahme des Kragens aufweisen.

In einer bevorzugten Ausführungsvariante kann vorgesehen sein, dass der Kragenaufnahmekanal zur Aufnahme des Kragens eine Nut darstellt und mit dem vorstehenden Kragen des wenigstens einen, in einen Einschubkanal eingeführten Dämpfungskörpers eine Formschlussverbindung ausbildet.

In einer bevorzugten Ausführungsvariante kann vorgesehen sein, dass zumindest einer der, vorzugsweise die, Dämpfungskörper einen zylindrischen Basiskörper aufweist bzw. aufweisen, wobei bevorzugt der Basiskörper ein Hohlzylinder ist und an einem Ende mit einem Deckel abgeschlossen ist, wobei besonders bevorzugt der Deckel den vorstehenden Kragen und/oder einen Rastverbindungsvorsprung und/oder eine Rastverbindungsaufnahme aufweist.

In einer bevorzugten Ausführungsvariante kann vorgesehen sein, dass der Kragenaufnahmekanal eine zumindest teilweise längserstreckte Nut aufweist, wobei sich die Nut des Kragenaufnahmekanals von der Einführöffnung bis zum Anschlag erstreckt.

Gemäß einer bevorzugten Ausführungsform der Laufrollenanordnung ist es vorgesehen, dass die Laufrollenaufhängung als eine Gabel mit zwei Gabelarmen ausgebildet ist, wobei in jedem der Gabelarme einer der Einschubkanäle ausgebildet ist, und/oder dass die Laufrollenaufhängung um eine, vorzugsweise orthogonal zum Laufrollenachskörper verlaufende, Schwenkachse schwenkbar lagerbar oder gelagert ist.

In einer bevorzugten Ausführungsvariante kann vorgesehen sein, dass die Gabel einstückig ausgebildet ist.

In einer bevorzugten Ausführungsvariante kann vorgesehen sein, dass die Gabel einstückig ausgebildet und aus einem einzigen Material aufgebaut ist.

In einer bevorzugten Ausführungsvariante kann vorgesehen sein, dass ein Schwenklager in und/oder an der Laufrollenaufhängung vorgesehen ist, wobei mittels des Schwenklagers die Laufrollenanordnung mit einer Förderanlage, wie z.B. einem Wagen oder einer Wagenanordnung, verbunden oder verbindbar ist und die Laufrollenaufhängung um eine, vorzugsweise orthogonal zum Laufrollenachskörper verlaufende, Schwenkachse des Schwenklagers schwenkbar lagerbar oder gelagert ist.

Das Schwenklager kann als Schwenkgleitlager oder als Schwenkwälzlager, bevorzugt als Schwenkkugellager oder Schwenkrollenlager, ausgeführt sein.

In einer bevorzugten Ausführungsvariante kann vorgesehen sein, dass das Schwenklager als Bestandteil der Laufrollenaufhängung also in anderen Worten direkt als ein Teilbereich der Laufrollenaufhängung ausgebildet ist. Das Schwenklager kann aber auch als separates Bauteil gefertigt und dann in die Laufrollenaufhängung eingebaut sein.

Durch den Einsatz eines Schwenklagers in Form eines Schwenkgleitlagers können zwei Gleitoberflächen mit möglichst niedrigen Reibkoeffizienten aufeinander entlanggleiten.

In einer bevorzugten Ausführungsvariante kann vorgesehen sein, dass eine der Gleitoberflächen Metall, vorzugsweise Stahl, aufweist oder aus Metall, vorzugsweise Stahl, besteht und die andere der Gleitoberflächen Kunststoff aufweist oder aus Kunststoff besteht.

In einer bevorzugten Ausführungsvariante kann vorgesehen sein, dass die Gleitoberflächen und/oder das Schwenkgleitlager und/oder ein ganzes Bauteil der Laufrollenanordnung und/oder die gesamte Laufrollenanordnung eine inkorporierte Schmierung aufweist.

Als inkorporierte Schmierstoffe im Schwenkgleitlager können beispielsweise Fluorpolymere, Polyolefine, Silikone, Sulfide wie MoS₂, Graphit in unterschiedlichen Formen, Siloxane oder Öle zum Einsatz kommen. Die inkorporierten Schmierstoffe können direkt in das Material der Laufrollenaufhängung eingelagert sein.

Weitere Einzelheiten und Vorteile bevorzugter Ausgestaltungsformen der Erfindung werden anhand der Figurenbeschreibung unter Bezugnahme auf die Zeichnungen im Folgenden näher erläutert. Darin zeigen:
- Fig. 1:: eine perspektivische Ansicht einer Förderanlage mit sechs erfindungsgemäßen Laufrollenanordnungen;
- Fig. 2:: eine perspektivische Explosionsdarstellung eines Ausführungsbeispiels einer erfindungsgemäßen Laufrollenanordnung;
- Fig. 3 bis 7:: verschiedene Ansichten und Darstellungen der Laufrollenanordnung aus Fig. 2;
- Fig. 8 bis 14:: verschiedene Ansichten der Laufrolle der Laufrollenanordnung aus Fig. 2 mit oder ohne Dämpfungskörper;
- Fig. 15 bis 20:: je eine ungeschnittene Seitenansicht und eine geschnittene Ansicht von drei Ausführungsbeispielen für die Anbindung einer Laufrollenanordnung an einen Beschlag.

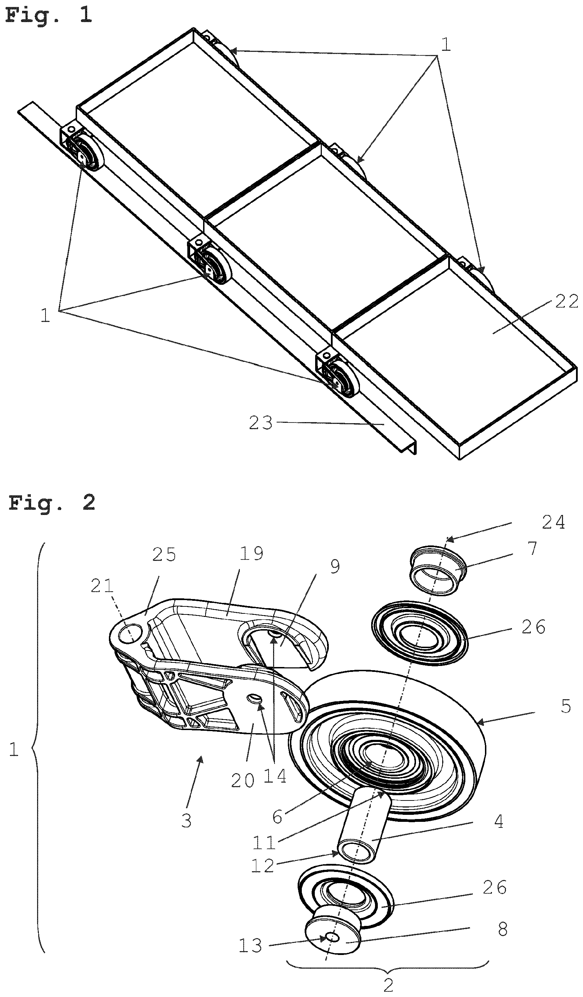

Fig. 1 zeigt eine perspektivische Ansicht einer Förderanlage 22 in Form eines Wagens mit sechs erfindungsgemäßen Laufrollenanordnungen 1.

Eine Förderanlage 22 kann, wie hier beispielhaft gezeigt, drei Behälterbereiche aufweisen, wobei jeder der Behälterbereiche zu beiden Seiten mit einer Laufrollenanordnung 1 versehen sein kann.

Durch die Laufrollenanordnungen 1 kann die Förderanlage 22 auf der Laufbahn 23 in mindestens eine Richtung bewegt, bevorzugt gerollt, werden.

Fig. 2 zeigt eine perspektivische Explosionsdarstellung eines Ausführungsbeispiels einer erfindungsgemäßen Laufrollenanordnung 1.

Wie in Fig. 2 zu sehen, umfasst die Laufrollenanordnung (1) eine Laufrolle (2) und eine Laufrollenaufhängung (3), wobei die Laufrolle (2) einen Laufrollenachskörper (4) und einen Laufrollenkörper (5) mit einer Laufrollenachsaufnahmeöffnung (6) aufweist und der Laufrollenkörper (5) drehbar auf dem, durch die Laufrollenachsaufnahmeöffnung (6) hindurchgeführten Laufrollenachskörper (4) gelagert ist, wobei der Laufrollenachskörper (4) unter Zwischenschaltung von zumindest zwei elastischen Dämpfungskörpern (7, 8) in Einschubkanälen (9, 10) der Laufrollenaufhängung (3) gelagert ist, wobei der Laufrollenachskörper (4) in einer Befestigungsstellung mittels der Dämpfungskörper (7, 8) klemmend in den Einschubkanälen (9, 10) der Laufrollenaufhängung (3) befestigt ist.

Die Laufrollenaufhängung 3 ist in Fig. 2 einstückig ausgeführt, stellt in diesem Ausführungsbeispiel eine Gabel dar und weist dementsprechend einen ersten Gabelarm 19, einen zweiten Gabelarm 20 sowie ein die Gabelarme 19, 20 verbindendes Gabelschiff 25 auf.

Auf der Innenseite des ersten Gabelarms 19 und des zweiten Gabelarms 20 befinden sich der erste Einschubkanal 9 und der zweite Einschubkanal 10, wobei in Fig. 2 lediglich der erste Einschubkanal 9 erkennbar ist.

Wie in Fig. 2 dargestellt, können die Einschubkanäle 9, 10 eine am unteren Rand des jeweiligen Gabelarms 19, 20 angeordnete Einführöffnung 15 aufweisen, durch welche die Laufrolle 2 mittels der Dämpfungskörper 7, 8, bevorzugt von unten nach oben, parallel zur Schwenkachse 21 eingeführt werden können.

Wie in Fig. 2 dargestellt, kann das Gabelschiff 25 eine, vorzugsweise orthogonal zum Laufrollenachskörper 4 verlaufende, Schwenkachse 21 aufweisen, um welche die Laufrollenaufhängung 3 schwenkbar lagerbar oder gelagert ist. Das Gabelschiff 25 weist somit für diese Schwenkachse 21 ein Schwenkgleitlager auf, wobei, wie im Ausführungsbeispiel in Fig. 2 dargestellt, das Schwenkgleitlager integraler Bestandteil der Laufrollenaufhängung 3 ist.

Die Laufrolle 2 kann, wie in Fig. 2 dargestellt, einen Laufrollenkörper 5, einen Laufrollenachskörper 4, je eine Abdeckung 26 für die beiden Stirnseiten des Laufrollenkörpers 5 und einen ersten Dämpfungskörper 7 sowie einen zweiten Dämpfungskörper 8 für je eine Stirnseite des Laufrollenachskörpers 4 aufweisen.

Der Laufrollenkörper 5 weist die Laufrollenachsaufnahmeöffnung 6 auf, welche ein durchgehendes Loch im Zentrum des Laufrollenkörpers 5 ausbildet, durch welches der Laufrollenachskörper 4 hindurchgeführt werden kann.

Der Laufrollenachskörper 4 kann ein zylindrisches Bauteil sein, welches ein erstes Ende 11 und ein zweites Ende 12 aufweist, wobei bevorzugt an jeweils einem der Enden 11, 12 einer der Dämpfungskörper 7, 8 angeordnet ist.

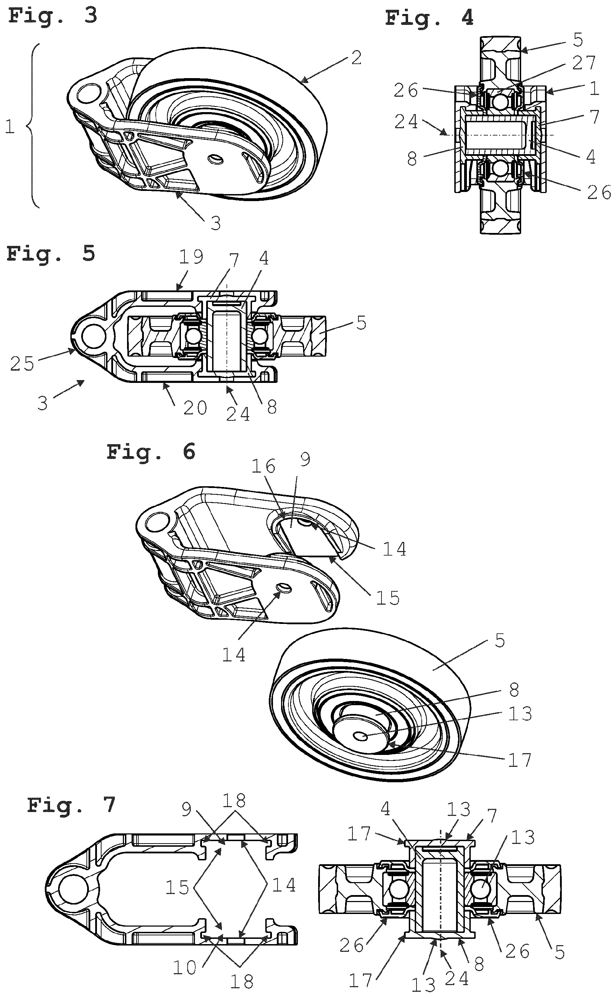

Fig. 3 bis 7 zeigen verschiedene Ansichten und Darstellungen der Laufrollenanordnung 1 aus Fig. 2.

Fig. 3 zeigt eine perspektivische Ansicht der Laufrollenanordnung 1 in der Befestigungsstellung.

Fig. 4 zeigt eine Schnittdarstellung der Laufrollenanordnung 1 in der Befestigungsstellung aus Fig. 3, wobei die Schnittebene parallel zur Schwenkachse 21 und parallel zur Rollendrehachse 24 durch den Mittelpunkt der Laufrolle 2 verläuft.

Fig. 5 zeigt eine Schnittdarstellung der Laufrollenanordnung 1 in der Befestigungsstellung aus Fig. 3, wobei die Schnittebene orthogonal zur Schwenkachse 21 und parallel zur Rollendrehachse 24 durch den Mittelpunkt der Laufrolle 2 verläuft.

In den Fig. 3 bis 5 ist gut zu erkennen, dass die Laufrolle 2 unter Zwischenschaltung des ersten Dämpfungskörpers 7 und des zweiten Dämpfungskörpers 8 mit der Laufrollenaufhängung 3 verbunden ist. In der dargestellten Stellung befindet sich die Laufrolle 2 zwischen den Gabelarmen 19 und 20 der Laufrollenaufhängung 3, wobei die Dämpfungskörper 7, 8 beginnend bei den Einführöffnungen 15 des ersten Einschubkanals 9 und des zweiten Einschubkanals 10 entlang der Einschubkanäle 9, 10 bis zum Anschlag 16, bevorzugt bis zu den Anschlägen 16, der Einschubkanäle 9, 10 eingeführt wurden. Die dargestellte Stellung entspricht der Befestigungsstellung der Laufrollenanordnung 1.

Wenn bei diesem dargestellten Ausführungsbeispiel zusätzlich zur Befestigungsstellung die Einschubkanäle 9, 10 nach unten weisen, beispielsweise wenn die Laufrollenanordnung 1 unten an einer Förderanlage 22 angeordnet ist, befindet sich die Laufrollenanordnung 1 in diesem Ausführungsbeispiel auch in der Betriebsstellung. Die Betriebsstellung kann auch in Fig. 1 erkannt werden.

Die Anschläge 16 der Einschubkanäle 9, 10 können in Form eines halbkreisförmigen Abschlusses der Einschubkanäle 9, 10 ausgeführt sein.

Wie in Fig. 6 und 7 besonders gut zu erkennen ist, weisen der erste Einschubkanal 9 und der zweite Einschubkanal 10 jeweils eine Einführöffnung 15 auf.

Der erste Einschubkanal 9 und/oder der zweite Einschubkanal 10 kann mit wenigstens einem Kragenaufnahmekanal 18 vorgesehen, bevorzugt kombiniert, sein, um den wenigstens einen Kragen 17 des ersten Dämpfungskörpers 7 und/oder des zweiten Dämpfungskörpers 8 entlang des ersten Einschubkanals 9 und/oder des zweiten Einschubkanals 10 bis in die Befestigungsstellung führen und dort mittels Formschluss festhalten zu können.

Wie in den Fig. 3 bis 7 zu sehen ist, kann vorgesehen sein, dass der Kragenaufnahmekanal 18 eines der beiden Einschubkanäle 9, 10 durch einen halbkreisförmigen Verlauf am Ende des jeweiligen Einschubkanals 9, 10 jeweils einen Anschlag 16 ausbildet.

Der Laufrollenachskörper 4 und damit die Laufrolle 2 werden in der Befestigungsstellung, vorzugsweise ausschließlich, mittels der Dämpfungskörper 7 und 8 an der Laufrollenaufhängung 3 klemmend befestigt. Hierzu werden die Dämpfungskörper 7 und 8 beim Einführen in die jeweiligen Einschubkanäle 9 und 10 günstigerweise elastisch deformiert. Diese Art der klemmenden Befestigung kann in einer einfachen Ausführungsform sogar rein auf Reibschluss beruhen.

Im hier gezeigten Ausführungsbeispiel ist aber zusätzlich zum Reibschluss vorgesehen, dass in der Befestigungsstellung der Laufrollenanordnung 1 wenigstens ein Rastverbindungsvorsprung 13 des ersten Dämpfungskörper 7 und/oder des zweiten Dämpfungskörpers 8 in wenigstens eine Rastverbindungsaufnahme 14 des ersten Gabelarms 19 und/oder des zweiten Gabelarms 20 eingerastet sein. Auf diese Weise kann das Verbleiben der Laufrollenanordnung 1 in der Befestigungsstellung, bevorzugt neben der klemmenden Befestigung zusätzlich, formschlüssig gewährleistet und/oder ein Verrutschen der Dämpfungskörper vermieden werden. Auch das Eingreifen der Dämpfungskörper 7 und 8 in die jeweiligen Einschubkanäle 9 und 10 und auch die Anschläge 16 sorgen in diesem Ausführungsbeispiel für eine zusätzliche formschlüssige Befestigung des Laufrollenachskörper 4 und damit der Laufrolle 2 an der Laufrollenaufhängung 3 in der Befestigungsstellung.

Fig. 6 zeigt eine perspektivische Darstellung der Laufrollenanordnung 1, wobei sich die Laufrolle 2 nicht in der Befestigungsstellung befindet.

Fig. 7 zeigt eine Schnittdarstellung der Laufrollenanordnung 1, wobei sich die Laufrolle 2 ebenfalls nicht in der Befestigungsstellung befindet. Die Schnittebene verläuft dabei orthogonal zur Schwenkachse 21 und parallel zur Rollendrehachse 24 durch die Rollendrehachse 24 des Laufrollenachskörpers 4 der Laufrolle 2.

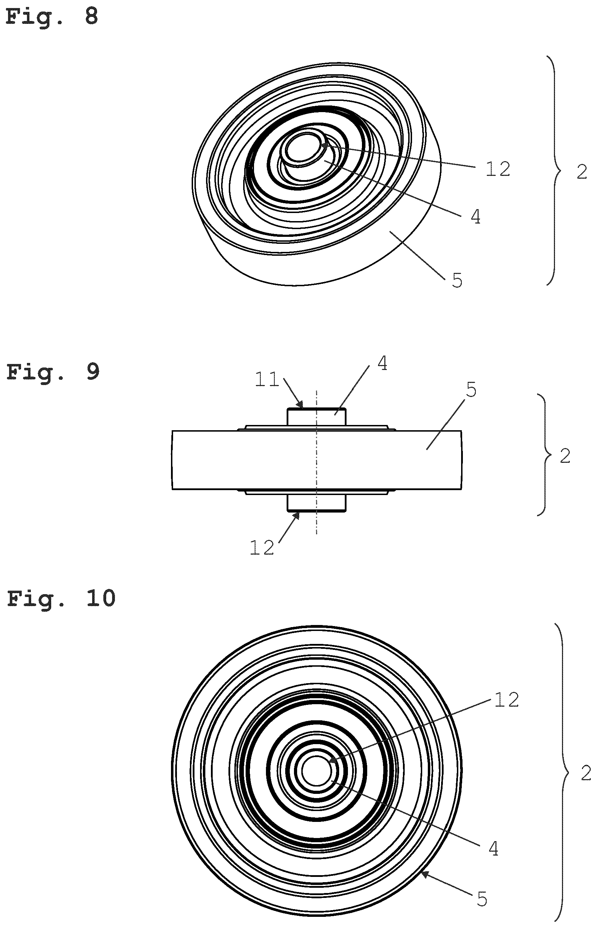

Fig. 8 bis 14 zeigen verschiedene Ansichten der Laufrolle 2 der Laufrollenanordnung 1 aus Fig. 2 mit oder ohne Dämpfungskörper 7, 8.

Fig. 8 zeigt eine perspektivische Ansicht der Laufrolle 2 samt Laufrollenkörper 5 und Laufrollenachskörper 4 ohne die Dämpfungskörper 7 und 8.

Fig. 9 zeigt eine Draufsicht der Laufrolle 2 aus Fig. 8.

Fig. 10 zeigt eine Vorderansicht der Laufrolle 2 aus Fig. 8.

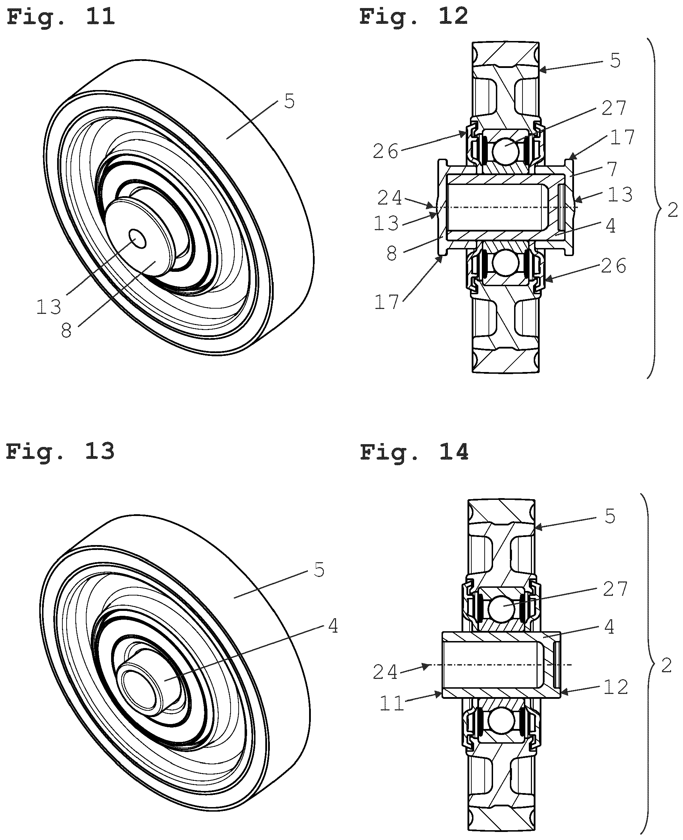

Fig. 11 zeigt eine perspektivische Ansicht der Laufrolle 2 samt dem Laufrollenkörper 5, dem Laufrollenachskörper 4 und den beiden Dämpfungskörpern 7, 8, wobei lediglich der erste Dämpfungskörper 8 erkennbar ist.

Fig. 12 zeigt eine Schnittdarstellung der Laufrolle 2 aus Fig. 11, wobei die Schnittebene durch die Rollendrehachse 24 verläuft.

Fig. 13 zeigt eine perspektivische Ansicht der Laufrolle 2 samt dem Laufrollenkörper 5 und dem Laufrollenachskörper 4, wobei im Vergleich zur Fig. 11 keiner der beiden Dämpfungskörper 7, 8 dargestellt ist.

Fig. 14 zeigt eine Schnittdarstellung der Laufrolle 2 aus Fig. 13, wobei die Schnittebene durch die Rollendrehachse 24 verläuft.

In Fig. 13 und 14 ist erkennbar, dass der Laufrollenachskörper 4 ein hohlzylindrisches Bauteil mit einem abgeschlossenen Ende und einem offenen Ende sein kann, wobei in Fig. 13 das offene Ende ersichtlich ist.

In den Fig. 4, 5, 7, 12 und 14 kann ein Lager der Laufrolle 2 besonders gut erkannt werden. Das Lager kann ein als separates Bauteil oder als integrierter Bestandteil der Laufrolle 2 ausgeführtes Gleitlager oder, wie in diesem Ausführungsbeispiel dargestellt, Wälzlager 27, hier konkret ein Kugellager, sein.

Das dargestellte Wälzlager 27 als Teil der Laufrolle 2 verbindet den Laufrollenkörper 5 mit dem Laufrollenachskörper 4 und überträgt zwischen diesen beiden Komponenten Kräfte, bevorzugt Druckkräfte, wobei gleichzeitig die Rollreibung bei der Rotation des Laufrollenkörpers 5 um die Rollendrehachse 24 herabgesetzt wird.

Um das Wälzlager 27 vor äußeren Einflüssen wie Verschmutzungen oder mechanischen Einwirkungen zu schützen, sind auf beiden Stirnseiten der Laufrolle 2 Abdeckungen 26 vorgesehen, sodass das Wälzlager 27 nach außen, bevorzugt vollständig, abgeschirmt ist.

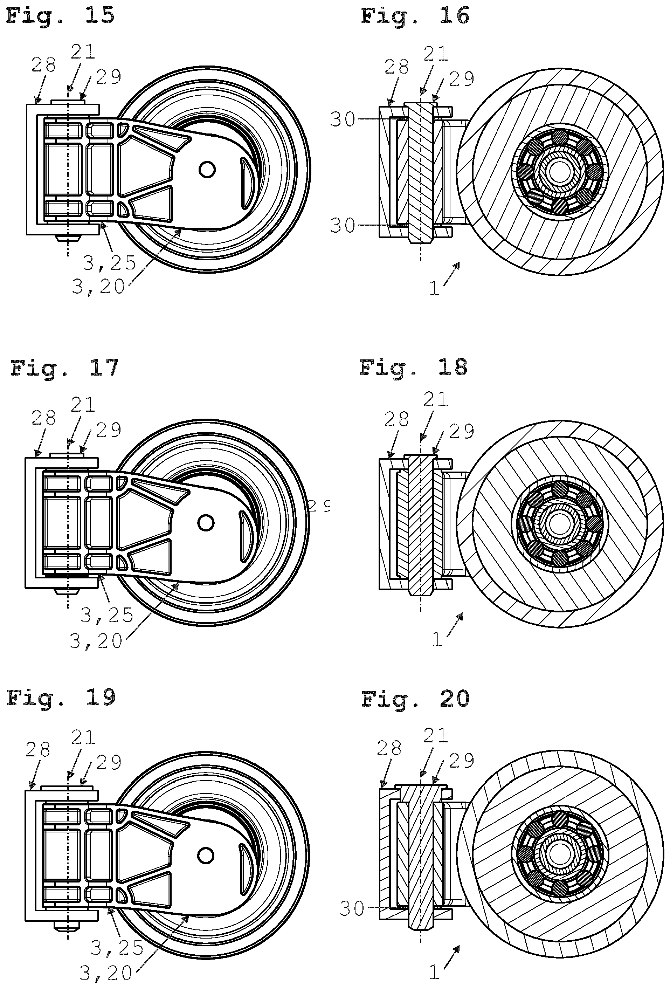

Fig. 15 bis 20 zeigen je eine ungeschnittene Seitenansicht und eine geschnittene Seitenansicht von drei Ausführungsbeispielen für die Anbindung einer Laufrollenanordnung 1 an einen Beschlag 28 einer Förderanlage 22.

Fig. 15 und 16 zeigen ein erstes Ausführungsbeispiel einer Anbindung einer Laufrollenanordnung 1 an einem Beschlag 28 mittels eines Stiftes 29. Dabei ist zwischen dem Gabelschiff 25 der Laufrollenanordnung 1 und dem Beschlag 28 jeweils an der Oberseite sowie an der Unterseite der Laufrollenaufhängung 3 eine Beilagscheibe 30 angeordnet.

Durch den Stift 29 und die Beilagscheiben 30 können Kräfte zwischen dem Beschlag 28 und dem Schwenkgleitlager der Laufrollenanordnung 1 übertragen werden. Auf diese Weise wird eine schwenkbare Lagerung der Laufrollenanordnung 1 bereitgestellt.

Somit kommt es bei diesem ersten Ausführungsbeispiel zu einem Gleiten zwischen den Beilagscheiben 30 sowie dem Stift 29 und der Laufrollenaufhängung 3.

Fig. 17 und 18 zeigen im Gegensatz zum ersten Ausführungsbeispiel aus Fig. 15 und 16 eine Anbindung der Laufrollenanordnung 1 an dem Beschlag 28 ohne dazwischenliegende Beilagscheiben 30. Anstelle der Beilagscheiben 30 aus den Fig. 15 und 16 weist bei diesem zweiten Ausführungsbeispiel das Gabelschiff 25 der Laufrollenaufhängung 3 jeweils einen niedrigen Vorsprung an der Oberseite und der Unterseite der Laufrollenaufhängung 3 auf.

Somit kommt es bei diesem zweiten Ausführungsbeispiel zu einem Gleiten zwischen dem Beschlag 28 sowie dem Stift 29 und den Vorsprüngen der Laufrollenaufhängung 3.

Fig. 19 und 20 zeigen im Gegensatz zu den ersten und zweiten Ausführungsbeispielen aus Fig. 15 bis 18 eine Anbindung der Laufrollenanordnung 1 an den Beschlag 28 mit einer an der Unterseite der Laufrollenaufhängung 3 angeordneten Beilagscheibe 30. Die an der Oberseite der Laufrollenaufhängung 3 angeordnete Beilagscheibe aus Fig. 15 und 16 und der an der Oberseite der Laufrollenaufhängung 3 angeordnete Vorsprung aus Fig. 17 und 18 wurde durch einen entsprechend konstruierten Stiftkopf des Stiftes 29 ersetzt. Der Stiftkopf des Stiftes 29 und der Beschlag 28 sind dabei derart konstruiert, sodass der Stift 29 sowohl die Anbindung der Laufrollenanordnung 1 an den Beschlag ermöglicht als auch eine Auflagefläche für die Oberseite der Laufrollenaufhängung 3 bereitstellt.

Somit kommt es bei diesem dritten Ausführungsbeispiel zu einem Gleiten zwischen dem Stift 29, insbesondere dem Stiftkopf, sowie zwischen der Beilagscheibe 30 und der Laufrollenaufhängung 3.

Die dargestellten Ausführungsbeispiele sind nicht als beschränkend zu verstehen, sondern können untereinander je nach Anforderungen kombiniert werden. So ist es beispielsweise denkbar, dass in einem Ausführungsbeispiel Beilagscheiben 30 mit Vorsprüngen der Laufrollenaufhängung 3 kombiniert werden oder mit anderen Worten Beilagscheiben 30 auf Vorsprüngen der Laufrollenaufhängung 3 aufliegen. Es kann auch vorgesehen sein, dass der Stift 29 mittels eines breiten Stiftkopfes, wie in Fig. 20 dargestellt, oder eines vom Stiftkopf beabstandeten Bundes auf einer Beilagscheibe 30 oder direkt auf der Laufrollenaufhängung 3 aufliegt.

Wie bereits erläutert, kann bei den dargestellten Ausführungsbeispielen vorgesehen sein, dass eine der Gleitoberflächen, bevorzugt des Stiftes 29 und/oder des Beschlags 38, Metall, vorzugsweise Stahl oder Aluminium, aufweist oder aus Metall, vorzugsweise Stahl, besteht und die andere der Gleitoberflächen, bevorzugt der Laufrollenaufhängung 3, Kunststoff aufweist oder aus Kunststoff besteht.

In einer bevorzugten Ausführungsvariante kann wenigstens eine der Gleitoberflächen Teil eines Beschlages 28 einer Förderanlage 22 und/oder Teil eines Stiftes 29 sein und eine andere Gleitoberfläche Teil der Laufrollenanordnung 1, bevorzugt der Laufrollenaufhängung 3, sein.

Wie bereits erläutert, kann bei den dargestellten Ausführungsbeispielen vorgesehen sein, dass die Gleitoberflächen und/oder das Schwenklager, bevorzugt das Schwenkgleitlager, der Laufrollenaufhängung 3 und/oder ein Teil der Laufrollenanordnung, bevorzugt die Laufrollenaufhängung 3, und/oder die gesamte Laufrollenanordnung 1 eine inkorporierte Schmierung aufweist.

Für einen besonders günstigen Reibkoeffizienten kann vorgesehen sein, dass das Gleiten im Zuge des Schwenkens der Laufrollenanordnung 1 mittels des Schwenkgleitlagers zwischen wenigstens einer Gleitoberfläche aus Metall und wenigstens einer Gleitoberfläche aus Kunststoff, bevorzugt aus Kunststoff mit inkorporierten Schmierstoffen, durchgeführt wird.

Das Schwenklager, bevorzugt das Schwenkgleitlager, der Laufrollenanordnung 1 und/oder die Laufrollenanordnung 1 als Ganzes kann eine Belastbarkeit von 1.000 N, bevorzugt von 4.000 N, aufweisen. Bevorzugt ist, wie hier in den Beispielen auch vorgesehen, ein Teil des Schwenkgleitlager direkt in der Laufrollenaufhängung 3 ausgebildet.

### L e g e n d e zu den Hinweisziffern:

- 1: Laufrollenanordnung
- 2: Laufrolle
- 3: Laufrollenaufhängung
- 4: Laufrollenachskörper
- 5: Laufrollenkörper
- 6: Laufrollenachsaufnahmeöffnung
- 7: erster Dämpfungskörper
- 8: zweiter Dämpfungskörper
- 9: erster Einschubkanal
- 10: zweiter Einschubkanal
- 11: erstes Ende des Laufrollenachskörpers
- 12: zweites Ende des Laufrollenachskörpers
- 13: Rastverbindungsvorsprung
- 14: Rastverbindungsaufnahme
- 15: Einführöffnung
- 16: Anschlag
- 17: Kragen
- 18: Kragenaufnahmekanal
- 19: erster Gabelarm
- 20: zweiter Gabelarm
- 21: Schwenkachse
- 22: Förderanlage
- 23: Laufbahn
- 24: Rollendrehachse
- 25: Gabelschiff
- 26: Abdeckung
- 27: Wälzlager
- 28: Beschlag
- 29: Stift
- 30: Beilagscheibe

## Patentansprüche

1. Laufrollenanordnung (1) umfassend eine Laufrolle (2) und eine Laufrollenaufhängung (3), wobei die Laufrolle (2) einen Laufrollenachskörper (4) und einen Laufrollenkörper (5) mit einer Laufrollenachsaufnahmeöffnung (6) aufweist und der Laufrollenkörper (5) drehbar auf dem, durch die Laufrollenachsaufnahmeöffnung (6) hindurchgeführten Laufrollenachskörper (4) gelagert ist, wobei der Laufrollenachskörper (4) unter Zwischenschaltung von zumindest zwei elastischen Dämpfungskörpern (7, 8) in Einschubkanälen (9, 10) der Laufrollenaufhängung (3) gelagert ist, **dadurch gekennzeichnet, dass** der Laufrollenachskörper (4) in einer Befestigungsstellung mittels der Dämpfungskörper (7, 8) klemmend in den Einschubkanälen (9, 10) der Laufrollenaufhängung (3) befestigt ist.

2. Laufrollenanordnung (1) nach Anspruch 1, wobei der Laufrollenachskörper (4) mittels elastischer Deformation zumindest eines der, vorzugsweise der, Dämpfungskörper (7, 8) in die Einschubkanäle (9, 10) der Laufrollenaufhängung (3) einführbar und aus diesen entnehmbar ist.

3. Laufrollenanordnung (1) nach Anspruch 1 oder 2, wobei der Laufrollenachskörper (4) härter als zumindest einer der, vorzugsweise die, Dämpfungskörper (7, 8) ist.

4. Laufrollenanordnung (1) nach einem der Ansprüche 1 bis 3, wobei zumindest einer der, vorzugsweise die, Dämpfungskörper (7, 8) in der Befestigungsstellung, vorzugsweise jeweils, direkt an zumindest einer Wand der Laufrollenaufhängung (3), welche einen der Einschubkanäle (9, 10) begrenzt, anliegt bzw. anliegen.

5. Laufrollenanordnung (1) nach einem der Ansprüche 1 bis 4, wobei zumindest einer der, vorzugsweise die, Dämpfungskörper (7, 8) als, auf, vorzugsweise jeweils, ein Ende (11, 12) des Laufrollenachskörpers (4), vorzugsweise zerstörungsfrei abnehmbar, aufgesetzte Kappe bzw. Kappen ausgebildet ist bzw. sind.

6. Laufrollenanordnung (1) nach einem der Ansprüche 1 bis 5, wobei zumindest einer der, vorzugsweise die, Dämpfungskörper (7, 8) in der Befestigungsstellung zusätzlich zur klemmenden Befestigung, vorzugsweise jeweils, mit zumindest einer Wand der Laufrollenaufhängung (3), welche einen der Einschubkanäle (9, 10) begrenzt, eine Rastverbindung ausbildet bzw. ausbilden.

7. Laufrollenanordnung (1) nach Anspruch 6, wobei die, vorzugsweise jeweilige, Rastverbindung einen Rastverbindungsvorsprung (13) als erstes Rastverbindungselement und eine Rastverbindungsaufnahme (14), in die der Rastverbindungsvorsprung (13) elastisch einrastbar ist, als zweites Rastverbindungselement aufweist, wobei eines der Rastverbindungselemente an einem der Dämpfungskörper (7, 8) ausgebildet ist und das andere der Rastverbindungselemente an einer Wand der Laufrollenaufhängung (3), welche einen der Einschubkanäle (9, 10) begrenzt, ausgebildet ist.

8. Laufrollenanordnung (1) nach einem der Ansprüche 1 bis 7, wobei die Einschubkanäle (9, 10) jeweils zwischen einer, vorzugsweise in einer Betriebsstellung der Laufrollenanordnung (1) nach unten weisenden, Einführöffnung (15) zum Einführen des jeweiligen Dämpfungskörpers (7, 8) und einem Anschlag (16) für den jeweiligen Dämpfungskörper (7, 8) längserstreckt ausgebildet sind, wobei der jeweilige Dämpfungskörper (7, 8) in der Befestigungsstellung am jeweiligen Anschlag (16) anliegt.

9. Laufrollenanordnung (1) nach einem der Ansprüche 1 bis 8, wobei zumindest einer der, vorzugsweise die, Dämpfungskörper (7, 8) einen vorstehenden Kragen (17) und zumindest eine Wand der Laufrollenaufhängung (3), welche einen der Einschubkanäle (9, 10) begrenzt, einen Kragenaufnahmekanal (18) zur Aufnahme des Kragens (17) aufweist.

10. Laufrollenanordnung (1) nach einem der Ansprüche 1 bis 9, wobei die Laufrollenaufhängung (3) als eine Gabel mit zwei Gabelarmen (19, 20) ausgebildet ist, wobei in jedem der Gabelarme (19, 20) einer der Einschubkanäle (9, 10) ausgebildet ist, und/oder dass die Laufrollenaufhängung (3) um eine, vorzugsweise orthogonal zum Laufrollenachskörper (4) verlaufende, Schwenkachse (21) schwenkbar lagerbar oder gelagert ist.

## Claims

1. Track roller assembly (1) comprising a track roller (2) and a track roller suspension (3), wherein the track roller (2) has a track roller axle body (4) and a track roller body (5) with a track roller axle receptacle opening (6), and the track roller body (5) being rotatably mounted on the track roller axle body (4) which is guided through the track roller axle receptacle opening (6), wherein the track roller axle body (4) being mounted in insertion channels (9, 10) of the track roller suspension (3) with at least two elastic damping members disposed therebetween, **characterised in that** the track roller axle body (4) is fastened in a clamping manner in a fastening position by means of the damping members (7, 8) in the insertion channels (9, 10) of the track roller suspension (3).

2. Track roller assembly (1) according to claim 1, wherein the track roller axle body (4) is introducible into the insertion channels (9, 10) of the track roller suspension (3) and removable therefrom by elastic deformation of at least one of the damping members (7, 8), preferably the damping members (7, 8).

3. Track roller assembly (1) according to claim 1 or 2, wherein the track roller axle body (4) is harder than at least one of the damping members (7, 8), preferably the damping members (7, 8).

4. Track roller assembly (1) according to one of claims 1 to 3, wherein at least one of the damping members (7, 8), preferably the damping members (7, 8), bears or bear directly on at least one wall of the track roller suspension (3) that delimits one of the insertion channels (9, 10) in the fastening position, preferably in each case.

5. Track roller assembly (1) according to one of claims 1 to 4, wherein at least one of the damping members (7, 8), preferably the damping members, comprises a cap or caps and, preferably each, is attached to an end (11, 12) of the track roller axle body (4), preferably in a non-destructibly removable manner.

6. Track roller assembly (1) according to one of claims 1 to 5, wherein at least one of the damping members (7, 8), preferably the damping members, forms or form a latching connection in the fastening position, in addition to the clamping fastening, preferably in each case, with at least one wall of the track roller suspension (3) that delimits one of the insertion channels (9, 10).

7. Track roller arrangement (1) according to claim 6, wherein the, preferably respective, latching connection has a latching connection protrusion (13) as a first latching connection element and a latching connection receptacle (14), into which the latching connection protrusion (13) can be elastically latched, as a second latching connection element, wherein one of the latching connection elements is formed on one of the damping members (7, 8) and the other of the latching connection elements is formed on a wall of the track roller suspension (3) that delimits one of the insertion channels (9, 10).

8. Track roller assembly (1) according to one of claims 1 to 7, wherein the insertion channels (9, 10) are in each case elongate and extend between an introduction opening (15) for introducing the respective damping member (7, 8) and a detent (16) for the respective damping member (7, 8), preferably wherein in an operating position of the track roller assembly (1) the introduction opening (15) points downward, wherein the respective damping member (7, 8) in the fastening position bears on the respective detent.

9. Track roller assembly (1) according to one of claims 1 to 8, wherein at least one of the damping members (7, 8), preferably the damping members (7, 8), has a projecting collar (17) and at least one wall of the track roller suspension (3) that delimits one of the insertion channels (9, 10) has a collar receptacle channel (18) for receiving the collar (17).

10. Track roller arrangement (1) according to one of claims 1 to 9, wherein the track roller suspension (3) comprises a fork with two fork arms (19, 20), wherein one of the insertion channels (9, 10) is formed in each of the fork arms (19, 20), and/or wherein the track roller suspension (3) is mountable or is mounted so as to be pivotable about a pivot axis (21) that runs preferably orthogonally to the track roller axle body (4).

## Revendications

1. Agencement de galet (1) comprenant un galet (2) et une suspension de galet (3), le galet (2) présentant un corps d'axe de galet (4) et un corps de galet (5) avec une ouverture de réception d'axe de galet (6), et le corps de galet (5) étant logé rotatif sur le corps d'axe de galet (4) passant à travers l'ouverture de réception d'axe de galet (6), le corps d'axe de galet (4) étant logé, avec l'interposition d'au moins deux corps d'amortissement (7, 8) élastiques, dans des canaux d'insertion (9, 10) de la suspension de galet (3), **caractérisé en ce que** le corps d'axe de galet (4) est, dans une position de fixation, fixé de manière serrée dans les canaux d'insertion (9, 10) de la suspension de galet (3) au moyen des corps d'amortissement (7, 8).

2. Agencement de galet (1) selon la revendication 1, dans lequel le corps d'axe de galet (4) peut être introduit dans les canaux d'insertion (9, 10) de la suspension de galet (3) et en être extrait par déformation élastique d'au moins l'un des corps d'amortissement (7, 8), de préférence des corps d'amortissement.

3. Agencement de galet (1) selon la revendication 1 ou 2, dans lequel le corps d'axe de galet (4) étant plus dur qu'au moins l'un des corps d'amortissement (7, 8), de préférence des corps d'amortissement.

4. Agencement de galet (1) selon l'une des revendications 1 à 3, dans lequel, dans la position de fixation, au moins l'un des corps d'amortissement (7, 8), de préférence les corps d'amortissement, viennent, de préférence chacun, directement en appui contre au moins une paroi de la suspension de galet (3) qui délimite l'un des canaux d'insertion (9, 10).

5. Agencement de galet (1) selon l'une des revendications 1 à 4, dans lequel au moins l'un des corps d'amortissement (7, 8), de préférence les corps d'amortissement, est conçu, ou sont conçus, sous la forme d'un capuchon ou de capuchons placé(s) sur une extrémité (11, 12) du corps d'axe de galet de roulement (4), de préférence chacun sur une extrémité (11, 12), le ou les capuchons étant de préférence amovibles sans destruction.

6. Agencement de galet (1) selon l'une des revendications 1 à 5, dans lequel, dans la position de fixation, en plus de la fixation par serrage, au moins l'un des corps d'amortissement (7, 8) forme, de préférence les corps d'amortissement forment, de préférence chacun, une liaison par encliquetage avec au moins une paroi de la suspension de galet (3) qui délimite l'un des canaux d'insertion (9, 10).

7. Agencement de galet (1) selon la revendication 6, dans lequel la liaison par encliquetage, de préférence la liaison par encliquetage respective, présente une saillie de liaison par encliquetage (13) comme premier élément de liaison par encliquetage, et un logement de liaison par encliquetage (14), dans lequel la saillie de liaison par encliquetage (13) peut s'encliqueter de manière élastique, comme second élément de liaison d'encliquetage, l'un des éléments de liaison par encliquetage étant formé sur l'un des corps d'amortissement (7, 8) et l'autre des éléments de liaison par encliquetage étant formé sur une paroi de la suspension de galet (3) qui délimite l'un des canaux d'insertion (9, 10).

8. Agencement de galet (1) selon l'une des revendications 1 à 7, dans lequel les canaux d'insertion (9, 10) sont chacun formés de manière à s'étendre en longueur entre une ouverture d'introduction (15), orientée de préférence vers le bas dans une position de fonctionnement de l'agencement de galet (1), pour l'introduction du corps d'amortissement (7, 8) respectif, et une butée (16) pour le corps d'amortissement (7, 8) respectif, le corps d'amortissement (7, 8) respectif venant en appui contre la butée (16) respective dans la position de fixation.

9. Agencement de galet (1) selon l'une des revendications 1 à 8, dans lequel au moins l'un des corps d'amortissement (7, 8) présente, de préférence les corps d'amortissement présentent, un collet (17) saillant, et au moins une paroi de la suspension de galet (3), qui délimite l'un des canaux d'insertion (9, 10), présente un canal de réception de collet (18) pour la réception du collet (17).

10. Agencement de galet (1) selon l'une des revendications 1 à 9, dans lequel la suspension de galet (3) est formée sous la forme d'une fourche avec deux branches de fourche (19, 20), l'un des canaux d'insertion (9, 10) étant formé dans chacune des branches de fourche (19, 20), et/ou en ce que la suspension de galet (3) est logée, ou peut être logée, pivotante autour d'un axe de pivotement (21), de préférence orthogonal au corps d'axe de galet (4).
